# EUROPEAN PATENT SPECIFICATION

(11) **EP 0 442 849 B1**
(45) Date of publication and mention of the grant of the patent: **03.04.1996**
(21) Application number: 91830005.4
(22) Date of filing: 15.01.1991
(51) Int. Cl.: B01J 49/00

(54) **Method for utilisation and regeneration of anionic resins in reflux water systems in dyeworks and similar**
Methode zur Verwendung und Regeneration von anionischen Harzen in Rückflusswassersystemen von Farblösungen und ähnlichen
Méthode d'utilisation et régénération de résines anioniques dans des systèmes d'eau à contre-courant de solutions tinctoriales et analogues

(30) Priority: 24.01.1990 IT 930990
(43) Date of publication of application: 21.08.1991
(73) Proprietor: Mancini, Valerio, I-50047 Prato, Firenze (IT); Valastro, Carmelo, I-50047 Prato, Firenze (IT)
(72) Inventor: Mancini, Valerio, I-50047 Prato, Firenze (IT); Valastro, Carmelo, I-50047 Prato, Firenze (IT)
(74) Representative: Mannucci, Michele

(56) References cited:
- EP-A- 0 219 414
- EP-A- 0 355 966
- BE-A- 896 812
- CH-A- 643 754
- FR-A- 1 279 356

## Description

The subject of the invention is a method for regeneration of anion exchange resins in reflux water treatment systems, which characteristically is used in the treatment of refluxes, and especially those from dye-works and in which the resins to be regenerated are treated with an alkalised NaCl solution.

The use of anion exchange resins for retention of organic molecules by absorption on the pore structure is known. Such resins are usually called scavenger resins. Examples of these resins are the Purolite A-500 and A-500P strong base, macroporous exchange resins. It is also known in the art (see, e.g. the technical data sheet of the abovementioned resins) that regeneration of the scavenger resins can be obtained by treating it with a solution of NaCl duly alkalised with NaOH, as disclosed, e.g. in the Purolite, A-500 ion exchange resins data sheet, issued by Purolite International Limited, Wales.

These known regenerative processes are not sufficiently efficient for regenerating resins in a dye-plant water treatment system.

The object of the invention is to provide a more efficient regenerative method.

The method according to the invention is characterized by the steps of
a) a first treatment with acidified NaCl solutions
b) a subsequent bubbling with air;
c) a further treatment with an NaCl solution;
d) a subsequent treatment with NaCl solution alkalised with NaOH.

Further advantageous embodiments of the invention are set forth in the dependent claims.

The invention will be understood better by following the description and the attached drawing, which provides a practical but non-limiting example of the invention. In the drawing:

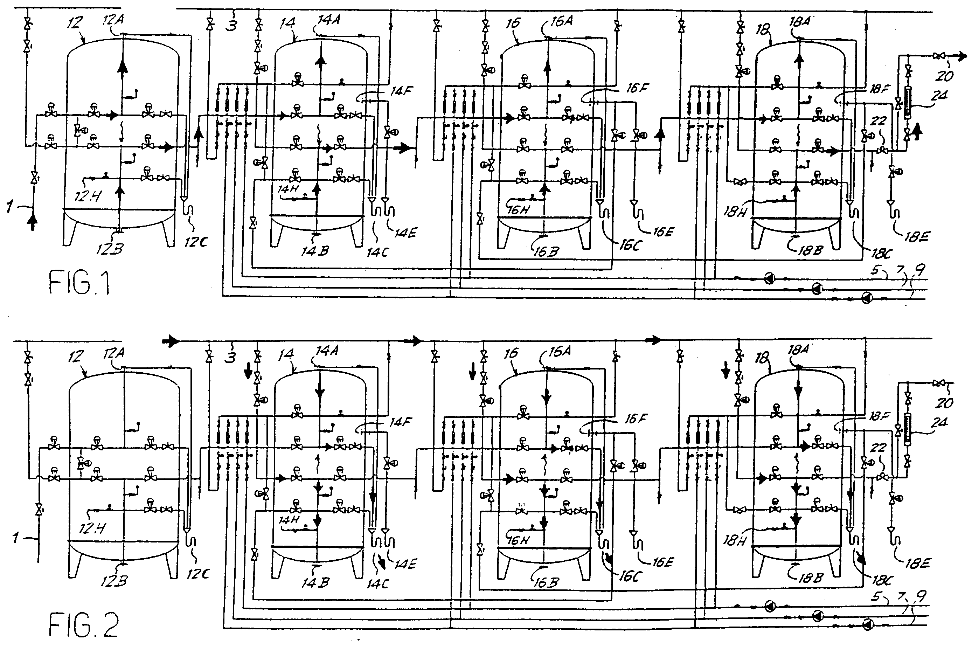

Figs. 1 to 12 provide a diagram of the system, in which the various phases of the active circuits are indicated.

In the diagrams, 1 shows the arrival of the water to be treated, 3 shows the softened hot water feed at about 30-40°C, 5 shows the feed line for hydrochloric acid HC1 generally about 33%, 7 shows the sodium hydroxide feed generally about 30% and 9 shows the feed for a sodium chloride NaC1 solution at about 24%. The various feed pipes 1, 3, 5, 7 and 9 are connected to the various columns of a system, which in the diagram is of the four column type. The first column, 12, is a filtering column, generally of quartzite type; columns 14, 16 and 18 are resin filtering columns, generally of anionic resin types, for removal of nitrites and nitrates and other substances, and these resins must be regenerated. The resins may be of polymer structure type, for example polystyrene with divinylbenzene cross-linking, such as "Purolite" or other equivalent resins. In the various columns, 12A, 14A, 16A and 18A indicate the inlets to the upper column, that is the top of the column; 12B, 14B, 16B and 18B indicate the inlets to the lower column, that is the bottom of the column; 12C, 14C, 16C and 18C indicate the outlets connected to the top and bottom of the columns; 14E, 16E and 18E indicate combined draw-off outlets at intermediate level 14F, 16F, 18F of resin columns 14, 16 and 18. 20 indicates the treated water outlet from the system, 22 indicates a pulse emission counter, and 24 a flowmeter; regeneration is in any case controlled automatically. 12H, 14H, 16H and 18H indicate inlets for the bubbling air, which must be fed into the bottom of the respective columns. Conventional and self-explanatory symbols on the individual pipes indicate the pumping means and the automatic control valves, manual control valves and other devices already known per se which are activated in the various phases illustrated in the diagrams, which phases are briefly described below.

Fig. 1 shows the operating phase with inlet from pipe 1 and outlet from pipe 20, and the route through the various columns from top to bottom, with operation in series. Figs. 2 and following indicate the various regenerating phases. Pipes in which there is circulation are marketed with arrows; arrows with a wavy or broken line indicate circulation in the columns of liquid or of air.

Fig. 2 shows a washing phase in counter-current of columns 14, 16 and 18, with feed at 14B, 16B and 18B of water from pipe 3 and with outlet from column top 14A, 16A, 18A towards discharges 14C, 16C and 18C; washing is obtained in parallel for the various columns, thus separately for each of them.

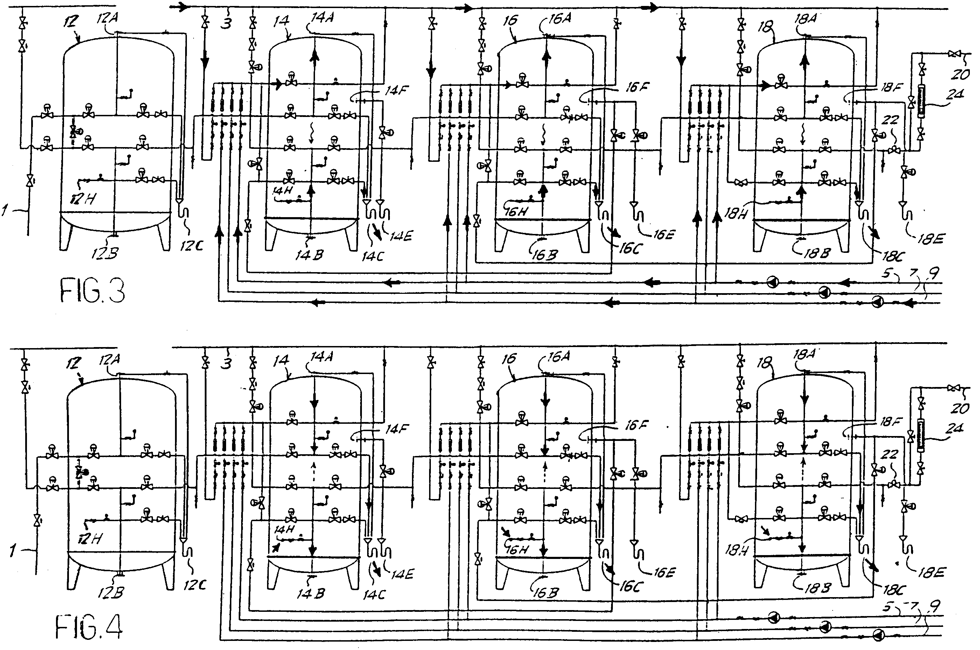

This is followed by an interval without circulation in the system itself. Fig. 3 shows a phase of passage of regenerants, which consist of a mixture of hot water from pipe 3, HC1 from pipe 5, and NaC1 from pipe 9, the mixture being fed in parallel for the individual columns, 14, 16 and 18 at the top 14A, 16A, 18A, with outlet from the bottom 14B, 16B and 18B to discharges 14C, 16C and 18C; the diluted NaC1 solution is acidified with HC1 and is active in equicurrent. This phase is rendered novel and characteristic by use of the acid in combination with sodium chloride. The acid that is present acts in particular on the upper zone of the resins in columns 14, 16 and 18 and causes detachment of the particles.

An air bubbling phase follows (see Fig. 4), the air being fed by 14H, 16H and 18H, in order to ensure detachment of the particles; the air enters at 14B, 16B and 18B, and simultaneously in counter-current, that is while rising, treats the various columns separately and thus in parallel, and comes out from outlet 14A, 16A and 18A and discharge 14C, 16C and 18C. The acid that is present detaches the particles from the resin beds.

A washing phase in counter-current follows with water entering from pipe 3, in an arrangement corresponding to that in Fig. 2; this is followed by a phase of interval or stasis similar to that envisaged after the phase illustrated in Fig. 2.

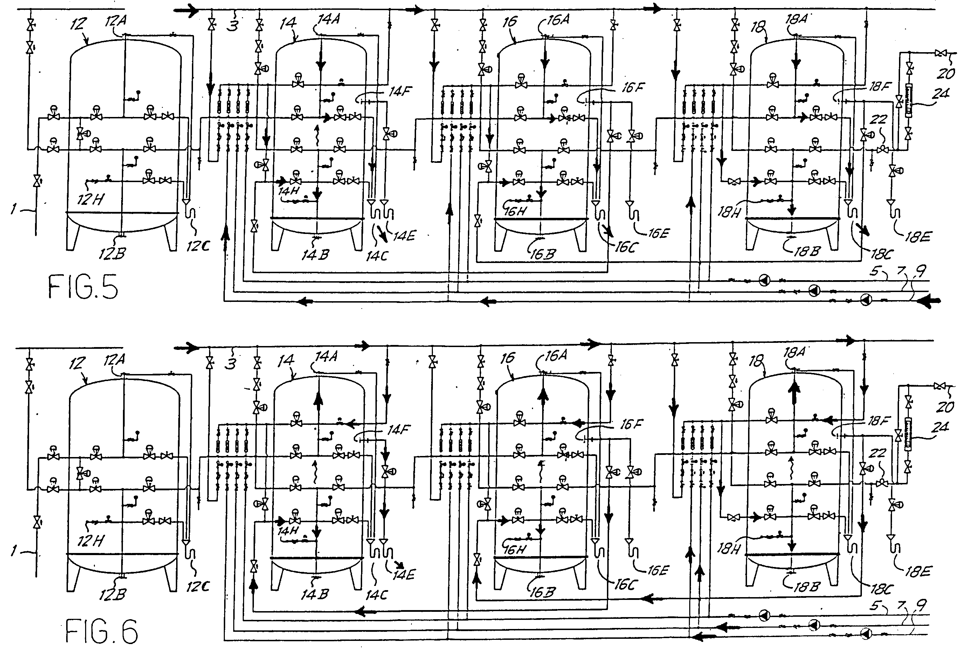

A further phase, illustrated in Fig. 5, is a phase of counter-current passage of regenerants consisting of a solution of water entering by pipe 3 and a NaC1 solution entering by pipe 9, which are mixed and fed to the bottom inlets 14B, 16B and 18B of columns 14, 16 and 18, leaving by connectors 14A, 16A and 18A to the discharges 14C, 16C and 18C. This passage of regenerants takes place in counter-current and in parallel for the said resin columns and is a characteristic phase of the invention.

This is followed by a phase illustrated in the diagram in Fig. 6 and consisting of passage of the NaC1 solution from pipe 9 and alkalised with NaOH from pipe 7, which solution is diluted with the hot water from pipe 3. This phase takes place in counter-current in the individual columns 14, 16 and 18 and in series in the various columns with inlet from the bottom at 18B of column 18 and removal by discharge 14E of column 14, while from each column the treatment mixture is removed through discharges 18F, 16F and 14F respectively; in order to ensure this removal a contrasting water feed is provided by pipe 3 through the top connectors 14A, 16A and 18A, thus facilitating elimination by the said intermediate discharges 18F, 16F and 14F. In this way highly effective utilisation of the regenerating solution is obtained, this solution leaving unexhausted by columns 18 and 16, so that it can be further utilised in the subsequent columns as far as 14. This phase is again particularly characteristic of the invention.

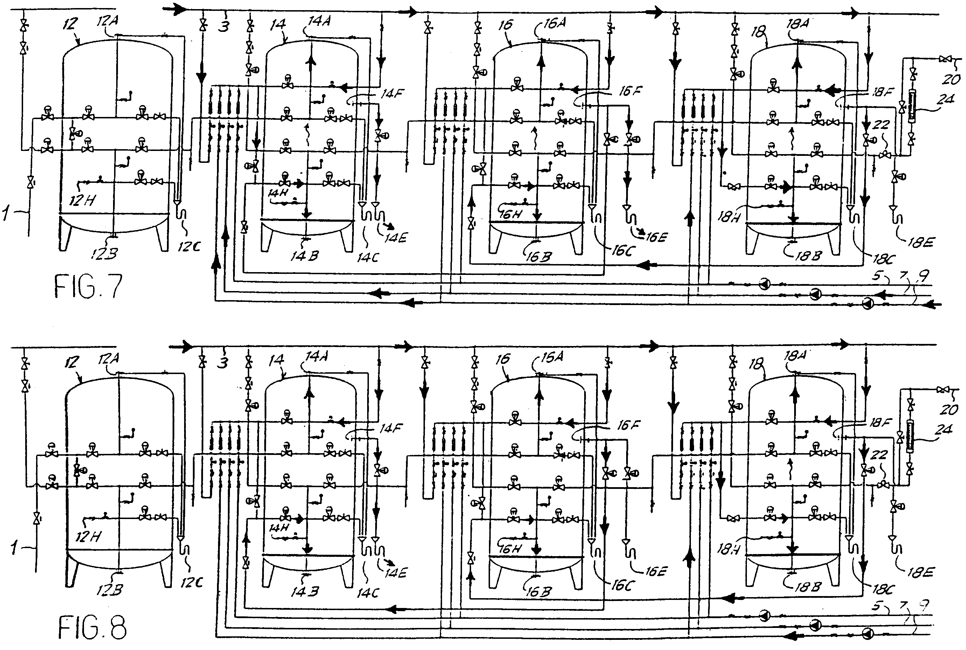

Fig. 7 shows a subsequent regenerating phase involving passage of an NaC1 solution entering by pipe 9 and which, in dilute mixture with water entering by pipe 3, is fed to column 18 in counter-current and thus with feed by bottom connector 18B for discharge in conditions similar to those of the phase in Fig. 6 by outlet 18F to feed the bottom connector 16B of column 16 and to be discharged through the outlet connector 16F to discharge 16E; a limited hot water current is fed in the two columns 18 and 16 by the top connectors 18A and 16A in order to facilitate discharges from 18F and 16F. Column 14 is on the contrary fed with an NaC1 solution by pipe 9, which solution is alkalised with NaOH entering by pipe 7, in counter-current and hence entering by bottom connector 14B into column 14 to be discharged by intermediate connector 14F to discharge 14E, with a limited water feed by the top connector 14A. This phase is again characteristic of the invention and allows completion of the regeneration with the alkalised NaC1 solution of column 14 and a further regeneration of columns 16 and 18.

A further phase is illustrated in Fig. 8, which shows a treatment of NaC1 solution in series and in counter-current starting from column 18 and then, still in counter-current, in column 16 and column 14, with the discharge from the various columns taking place through the intermediate discharges 18F, 16F and 14F with final discharge from 14E and with a water feed to column 18 for mixing the NaC1 solution, and with limited contrasting water feed from the top 18A, 16A and 14A of the three columns. This phase is again characteristic of the invention.

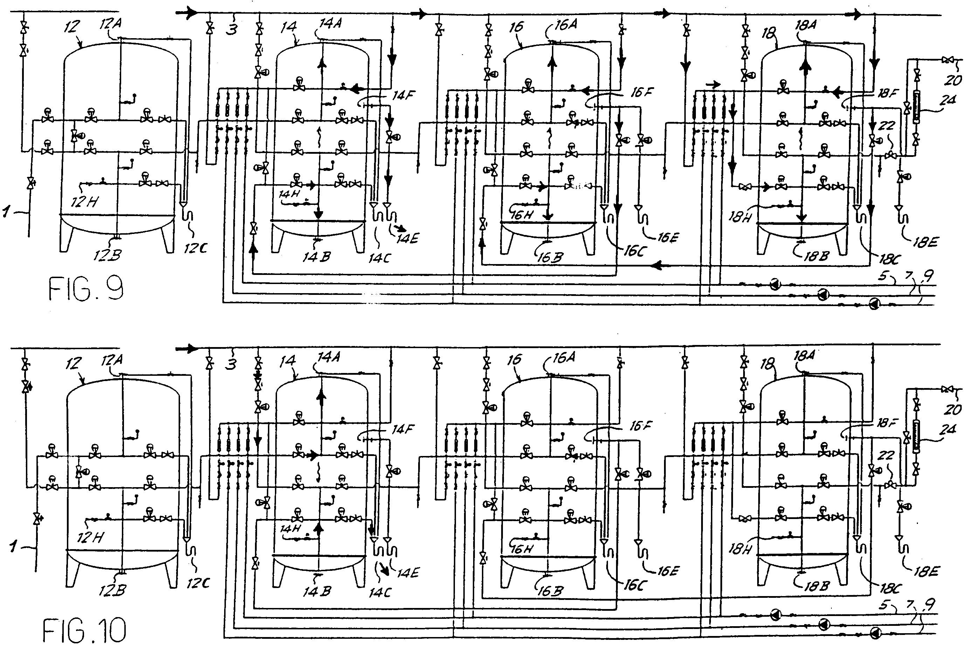

A further phase, illustrated in Fig. 9, is a slow washing phase with shift into counter-current with ciculation in series from column 18 to column 16 and then column 14, the water being fed by 3 at the bottom into connector 18B of column 18, discharged by connector 18F, fed to bottom connector 16B of column 16, discharged by intermediate connector 16F, fed to bottom connector 14B of column 14 and expelled by connector 14F to discharge 14E; a limited contrasting water feed is provided at top connectors 14A, 16A and 18A of the three columns. In this way slow elimination of the regenerant is obtained.

An interval then occurs, as provided between the two phases illustrated in Fig. 1 and Fig. 2.

There then follows a phase, as illustrated in Fig. 10, of rapid equicurrent washing of column 14 only, with water feed by pipe 3 to connector 14A and removal by bottom connector 14B through the discharge 14C; rapid washing of column 14 thus takes place.

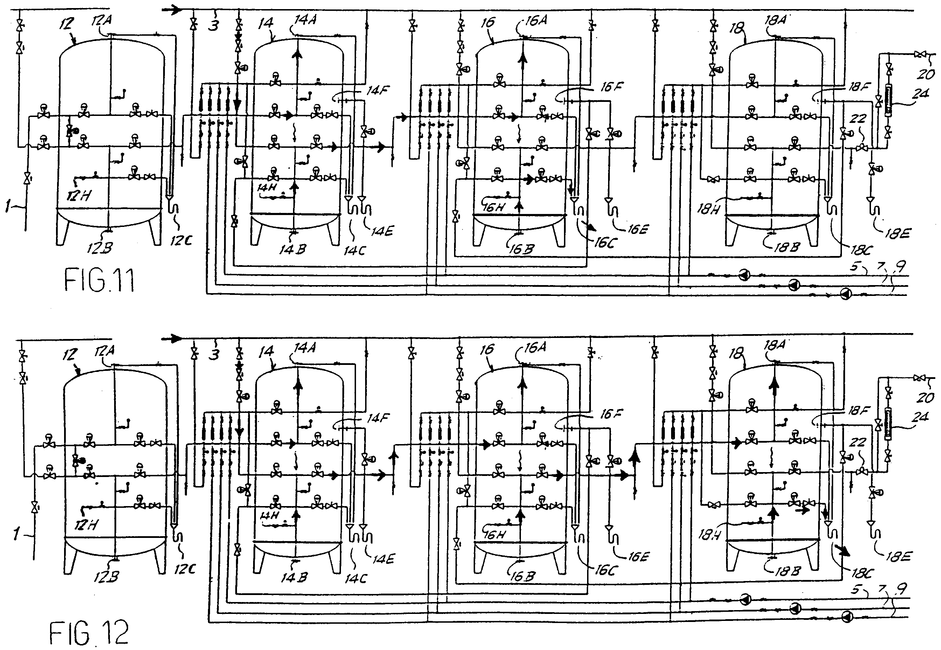

Fig. 11 again illustrates a subsequent rapid washing phase, which involves columns 14 and 16 in series and in equicurrent, with feed from pipe 3 and top connector 14A, and outlet from bottom connector 14B to feed top connector 16A, and outlet by bottom connector 16B for discharge by 16C. Washing of the two columns 14 and 16 is thus obtained with a particularly restricted water consumption, which is important in many cases.

This is again followed by a phase, illustrated in Fig. 12, of washing before the new operating phase, and consisting in a washing in series and in equicurrent of the three columns 14, 16 and 18, with water feed by pipe 3 to top connector 14A, outlet from bottom connector 14B for top connector 16A with outlet from bottom connector 16B to feed top connector 18A and outlet by bottom connector 18B to discharge 18C. This phase allows the end and completion of washing of columns 14 and 16, and a sufficient washing of the end column 18.

The operating phase as illustrated in Fig. 1 is then resumed.

A characteristic of the invention is the treatment of waste waters containing surface-active agents and dyes, especially for refluxes from dye-works and similar, and reliable absorption of dyes and ionic surface-active agents and also at least a good proportion of non-ionic surface-active agents is obtained, it being possible for the residues to be reused by recycling the waters coming from the treatment in the system in question.

The method and system according to the invention may also be used for other treatments equivalent to that of dye-works' refluxes and similar, avoiding marked presence of greases.

These and other purposes and advantages will emerge clearly to experts after a reading of the text of the description.

## Claims

1. Method for regeneration of anion exchange resins in reflux water treatment systems comprising at least one treatment column, in which the resins to be regenerated are treated with an alkalised NaCl solution, characterised by the steps of:
a) a first treatment with acidified NaCl solution;
b) a subsequent bubbling with air;
c) a further treatment with an NaCl solution;
d) a subsequent treatment with NaCl solution alkalised with NaOH.

2. Method according to claim 1, characterised in that said treatment step (a) with acidified NaCl solution is performed in equi-current and said subsequent treatment steps (c) with NaCl solution and (d) with alkalised NaCl solution are performed in counter-current, the direction of the flow being referred to the usual direction of flow during the water treatment mode of the system.

3. Method according to claim 1 or 2, in a multi-column system, characterised in that the said treatment step (c) with NaCl solution is carried out counter-currently in parallel and said treatment step (d) with alkalised NaCl solution is carried out in series from the last to the first column.

4. Method according to claim 3, characterised in that it includes a further step (e) wherein the first column (14), with respect to the usual direction of flow during water treatment, is treated in counter-current with NaCl solution alkalised with NaOH while the subsequent column or columns (16; 18) are treated with NaCl solution, with discharge at a lower level than the top of the resin mass.

5. Method according to claim 4, for three-column systems, characterised in that during said further step (e) the last two columns (16, 18) are treated in series and in counter-current starting from the last column (18).

6. Method according to one or more of claims 1 to 5 in a multi-column system, characterised in that it also includes the following treatment steps of:
f) a further treatment with NaCl solution in counter-current and in series from the last (18) to the first (14) column,
g) a subsequent slow counter-current washing with water in series from the last to the first column, and
h) a subsequent rapid equi-current washing with water in series from the first to the last column, whereby the columns are put on stream subsequently.

## Patentansprüche

1. Verfahren zum Regenerieren von Anionen-Austauschharzen in Rückflußwasserbehandlungssystemen mit mindestens einer Behandlungskolonne, in der die zu regenerierenden Harze mit einer alkalisierten NaCl-Lösung behandelt werden, **gekennzeichnet** durch die folgenden Schritte:
a) eine erste Behandlung mit angesäuerter NaCl-Lösung;
b) ein anschließendes Durchblasen mit Luft;
c) eine weitere Behandlung mit einer NaCl-Lösung;
d) eine nachfolgende Behandlung mit einer mit NaOH alkalisierten NaCl-Lösung.

2. Verfahren nach Anspruch 1, dadurch **gekennzeichnet,** daß der Behandlungsschritt (a) mit angesäuerter NaCl-Lösung im Gleichstrom durchgeführt wird und daß die nachfolgenden Behandlungsschritte (c) mit NaCl-Lösung und (d) mit alkalisierter NaCl-Lösung im Gegenstrom durchgeführt werden, wobei sich die Strömungsrichtung auf die normale Strömungsrichtung während des Wasserbehandlungsbetriebs des Systems bezieht.

3. Verfahren nach Anspruch 1 oder 2 in einem Mehrkolonnensystem, dadurch **gekennzeichnet,** daß der Behandlungsschritt (c) mit NaCl-Lösung im Gegenstrom und parallel durchgeführt wird, und daß der Behandlungsschritt (d) mit alkalisierter NaCl-Lösung in Serie von der letzten bis zur ersten Kolonne durchgeführt wird.

4. Verfahren nach Anspruch 3, dadurch **gekennzeichnet,** daß sie einen weiteren Schritt (e) umfaßt, bei dem die bezüglich der normalen Strömungsrichtung während der Wasserbehandlung erste Kolonne (14) im Gegenstrom mit einer mit NaOH alkalisierten NaCl-Lösung behandelt wird, während die nachfolgende Kolonne oder Kolonnen (16; 18) mit NaCl-Lösung behandelt werden, mit Abzug auf einem niedrigerem Niveau als das obere Ende der Harzmasse.

5. Verfahren nach Anspruch 4 für drei Kolonnensysteme, dadurch **gekennzeichnet,** daß während des weiteren Schrittes (e) die letzten zwei Kolonnen (16, 18) in Serie und im Gegenstrom, ausgehend von der letzten Kolonne (18), behandelt werden.

6. Verfahren nach einem oder mehreren der Ansprüche 1 bis 5 in einem Mehrkolonnensystem, dadurch **gekennzeichnet,** daß es ferner die folgenden Behandlungsschritte umfaßt:
f) eine weitere Behandlung mit NaCl-Lösung im Gegenstrom und in Serie von der letzten (18) bis zur ersten (14) Kolonne;
g) ein nachfolgendes langsames Gegenstrom-Waschen mit Wasser in Serie von der letzten bis zur ersten Kolonne; und
h) ein nachfolgendes schnelles Gleichstrom-Waschen mit Wasser in Serie von der ersten bis zur letzten Kolonne, wobei die Kolonnen nacheinander zugeschaltet werden.

## Revendications

1. Procédé pour la régénération de résines échangeuses d'anions dans des systèmes de traitement d'eau à reflux comprenant au moins une colonne de traitement où les résines à régénérer sont traitées avec une solution de NaCl alcalinisée, caractérisé par les étapes de:
a) un premier traitement avec une solution de NaCl acidifiée;
b) un barbotage subséquent avec de l'air;
c) un autre traitement avec une solution de NaCl;
d) un traitement subséquent avec une solution de NaCl alcalinisée avec NaOH.

2. Procédé selon la revendication 1, caractérisé en ce que ladite étape de traitement (a) avec la solution de NaCl acidifiée est réalisé en équi-courant et lesdites étapes de traitement subséquentes (c) avec la solution de NaCl et (d) avec la solution de NaCl alcalinisée sont réalisées à contre-courant, la direction de l'écoulement se rapportant à la direction usuelle d'écoulement pendant le mode de traitement d'eau du système.

3. Procédé selon la revendication 1 ou 2, dans un système à plusieurs colonnes, caractérisé en ce que ladite étape de traitement (c) avec la solution de NaCl est mise en oeuvre à contre-courant en parallèle et ladite étape de traitement (d) avec la solution de NaCl alcalinisée est mise en oeuvre en séries de la dernière colonne à la première colonne.

4. Procédé selon la revendication 3, caractérisé en ce qu'il comprend une autre étape (e) dans laquelle la première colonne (14), par rapport à la direction usuelle de l'écoulement pendant le traitement de l'eau est traitée à contre-courant avec la solution de NaCl alcalinisée avec NaOH tandis que la colonne ou les colonnes subséquentes (16, 18) sont traitées avec la solution de NaCl avec une décharge à un niveau inférieur plutôt qu'au-dessus de la masse de résine.

5. Procédé selon la revendication 4, pour des systèmes à trois colonnes, caractérisé en ce que pendant ladite autre étape (e), les deux dernières colonnes (16, 18) sont traitées en séries et selon un démarrage à contre-courant à partir de la dernière colonne (18).

6. Procédé selon l'une ou plusieurs des revendications 1 à 5 dans un système à plusieurs colonnes, caractérisé en ce qu'il comprend également les étapes de traitement suivantes de:
f) un autre traitement avec une solution de NaCl à contre-courant et en séries à partir de la dernière colonne (18) à la première colonne (14),
g) un lavage subséquent lent à contre-courant avec de l'eau en séries à partir de la dernière colonne à la première colonne, et
h) un lavage subséquent rapide équi-courant avec de l'eau en séries de la première colonne à la dernière colonne si bien que les colonnes sont mises sous courant subséquemment.
